# EUROPEAN PATENT APPLICATION

(11) **EP 3 372 639 A1**
(43) Date of publication of application: **12.09.2018**
(21) Application number: 16861786.8
(22) Date of filing: 02.11.2016
(51) Int. Cl.: C08L 15/00, B60C 1/00, C08C 19/25, C08K 3/36, C08L 7/00, C08L 9/06, C08L 101/00

(54) **RUBBER COMPOSITION AND TIRE**

(30) Priority: 05.11.2015 JP 2015217926
(71) Applicant: Bridgestone Corporation, Tokyo 104-8340 (JP)
(72) Inventor: SAKURAI, Hideyuki, Tokyo 104-8340 (JP)
(74) Representative: Oxley, Robin John George
(86) International application number: PCT/JP2016/004805
(87) International publication number: WO 2017/077714

(57) **Abstract**

Provided is a rubber composition capable of improving the wet gripping performance of the tire, and a tire having improved wet gripping performance. The A rubber composition comprises a rubber component (A), a thermoplastic resin (B), and a filler (C), wherein: the rubber component (A) contains 10 to 100 parts by mass of a modified styrene-butadiene copolymer rubber having a glass-transition temperature (Tg) of -50°C or less per 100 parts by mass of the rubber component (A); and the rubber composition contains 5 to 30 parts by mass of the thermoplastic resin (B) per 100 parts by mass of the rubber component (A). The tire uses the rubber composition for a tread rubber.

## Description

### TECHNICAL FIELD

This disclosure relates to a rubber composition and a tire.

### BACKGROUND

A tire, from the viewpoint of safety on wet road surface, is required to have wet gripping performance.

Regarding the wet gripping performance, suggested is a tire having improved performance on icy and snowy road and wet road surface, which uses for a tread rubber a rubber composition obtained by compounding in specific amounts of: a specific rubber component such as natural rubber and the like; and a C₅ based resin (see, e.g., JP2009-256540A (PTL1)).

Moreover, from the viewpoint of resource saving, a tire is required to have breaking resistance.

### CITATION LIST

### Patent Literature

PTL1: JP2009-256540A

### SUMMARY

### (Technical Problem)

In this way, a rubber composition capable of further improving the wet gripping performance is needed. Moreover, a rubber composition capable of obtaining excellent wet gripping performance and breaking resistance is needed.

It would thus be helpful to provide a rubber composition capable of improving the wet gripping performance of a tire. Moreover, it would be helpful to provide a tire having improved wet gripping performance.

### (Solution to Problem)

The rubber composition according to this disclosure is a rubber composition comprising a rubber component (A), a thermoplastic resin (B), and a filler (C), wherein: the rubber component (A) contains 10 to 100 parts by mass of a modified styrene-butadiene copolymer rubber (hereinafter referred to simply as "modified SBR" as well) having a glass-transition temperature (Tg) of -50°C or less per 100 parts by mass of the rubber component (A); and the rubber composition contains 5 to 30 parts by mass of the thermoplastic resin (B) per 100 parts by mass of the rubber component (A). According to the rubber composition of this disclosure, it is possible to improve the wet gripping performance of a tire.

Each glass-transition temperature (Tg) of the modified styrene-butadiene copolymer rubber and the polymers such as natural rubber in the rubber component may be measured via a temperature dispersion curve of tan*δ*, for example, measured by using a differential scanning calorimeter manufactured by TA Instruments at a sweep rate of 5°C/min to 10°C/min. In this disclosure, |Tg₁-Tg₂| refers to the absolute value of the difference of Tg₁ and Tg₂.

In this disclosure, the expression that two or more polymers are phase-separated means that the two or more polymers are insoluble to each other. In this disclosure, the phrase "phase-separated in sub-micron order" refers to different staining conditions when observing a region of 4 µm × 4 µm of the rubber composition by using FIB/SEM. In this case, these polymers may appear to the naked eye as being compatible with each other as long as they are phase-separated in sub-micron order.

An existence ratio of the filler existing in a phase of the modified SBR may be measured, for example, by measuring a smooth surface of a sample cut with microtome in a measurement range 2 µm × 2 µm, by using an atomic force microscope (AFM), e.g., MFP-3D manufactured by ASYLUM RESEARCH. For example, in the case of measuring a system in which the natural rubber and the modified SBR are separated into two phases, based on a ternarized image obtained by converting with a histogram the two polymers and the filler portion of the obtained AFM image into a ternarized image, the filler areas respectively included in the phases of the two polymer components are obtained, and the ratio of the filler existing in the modified SBR is calculated from the filler total amount in the measured area. In the case where the filler is on the interface of the two polymers, the areas of the filler are divided by connecting two points where each polymer and the filler contact each other.

In this disclosure, in a domain obtained by ternarizing the image obtained with AFM and then extracting a part corresponding to the filler, a domain width (region width) of the phase of the modified SBR refers to, in the case where a domain is circular, the diameter of the circle; and refers to, in the case where a plurality of domains are amorphous such as a mottled pattern, a maximum length of the domains in a direction orthogonal to each longitudinal direction of the domains (a direction in which both ends of one domain have a maximum linear distance). The calculation is performed with the removed part compensated if the filler is added into one polymer phase, and with the same remaining removed if the filler is on the interface of the domains of the two polymers.

An average aggregate area of the filler may be obtained by, for example, obtaining an aggregate area of the filler portion with an image obtained via FIB/SEM within a measurement range of 4 µm × 4 µm, and calculating the average aggregate area of the filler portion in numerical average (arithmetic average) from the entire aggregate area and the number of aggregates of the filler portion. During the calculation, particles in contact with the edges (sides) of the image are not counted, and particles of 20 pixels or less are considered as noise and not counted.

In this disclosure, sub-micron order refers to a range of 100 nm or more and less than 1000 nm.

In this disclosure, a (co)polymer refers to a polymer or a copolymer. A (co)polymer before modification (unmodified) can refer to a base polymer. In the case where a modified functional group is, e.g., amino group, a modification ratio in a modified polymer such as modified SBR and the like may be measured according to the following method. By dissolving the modified polymer in toluene, and then precipitating in a large amount of methanol, amino group containing compounds which are not bonded to the modified polymer are separated from the rubber, and then dried. Polymers subjected to the present treatment are used as samples, to quantify their total amino group contents according to the "testing method for total amine values" according to JIS K7237. Next, the samples are subjected to quantification of their contents of secondary amino groups and tertiary amino groups according to the "acetylacetone blocked method". O-nitrotoluene is used as a solvent to dissolve the samples, added with acetylacetone, and subjected to potential-difference titration with perchloric acid acetic acid solution. The primary amino group content is obtained by subtracting the contents of secondary amino groups and tertiary amino groups from the entire amino group content, and by dividing the same with the polymer weight used in the analysis, the content of primary amino groups bonded to the polymer is obtained. Regarding the tertiary amino group content, by dissolving the polymer in toluene, and then precipitating in a large amount of methanol, amino group containing compounds which are not bonded to the modified polymer are separated from the rubber, and then dried. The polymers subjected to the present treatment are used as samples, to quantify their tertiary amino group content according to the "acetylation method". O-nitrotoluene + acetic acid is used as a solvent to dissolve the samples, added with formic acid/acetic anhydride mixed solution, and subjected to potential-difference titration with perchloric acid acetic acid solution. The content of tertiary amino groups bonded to the polymer is obtained by dividing the tertiary amino group content with the polymer weight used in the analysis.

In this disclosure, the "modified functional groups having interactivity with the filler" refer to functional groups capable of forming for example, covalent bonds or an intermolecular force (an intermolecular force such as ion-dipole interaction, dipole-dipole interaction, hydrogen bond, Van der Waals force and the like) between the modified functional groups and a surface of the filler (e.g., silica).

Each weight-average molecular weight of the polymer components may be calculated, e.g., via gel permeation chromatography (GPC) in terms of standard polystyrene.

In this disclosure, examples of a hydrolyzable group include, e.g., a trialkylsilyl group such as trimethylsilyl group, tert-butyldimethylsilyl group and the like; -O(trialkylsilyl) group; -S(trialkylsilyl) group; -COO(trialkylsilyl) group; and -N(trialkylsilyl) group.

In this disclosure, (thio)isocyanate group refers to isocyanate group or thioisocyanate group. (Thio)epoxy group refers to epoxy group or thioepoxy group. (Thio)ketone group refers to ketone group or thioketone group. (Thio)aldehyde group refers to aldehyde group or thioaldehyde group. (Thio)carboxylic acid ester group refers to carboxylic acid ester group or thiocarboxylic acid ester group.

Further, in this disclosure, "C₁ to C₂₀ monovalent aliphatic or alicyclic hydrocarbon group" refers to "C₁ to C₂₀ monovalent aliphatic hydrocarbon group or C₃ to C₂₀ monovalent alicyclic hydrocarbon group". The same goes with the case of divalent hydrocarbon group.

In this disclosure, a halogen atom refers to fluorine, chlorine, bromine or iodine.

In this disclosure, a TMS refers to a trimethylsilyl group.

### (Advantageous Effect)

According to this disclosure, it is possible to provide a rubber composition capable of improving the wet gripping performance of the tire. Moreover, according to this disclosure, it is possible to provide a tire having improved wet gripping performance.

### DETAILED DESCRIPTION

Embodiments of this disclosure are described hereinafter. The following provides further illustration for this disclosure, which is only provided for illustration and in no way limits this disclosure.

### (Rubber composition)

The rubber composition according to this disclosure is a rubber composition comprising a rubber component (A), a thermoplastic resin (B), and a filler (C), wherein: the rubber component (A) contains 10 to 100 parts by mass of a modified SBR having a glass-transition temperature (Tg) of -50°C or less per 100 parts by mass of the rubber component (A); and the rubber composition contains 5 to 30 parts by mass of the thermoplastic resin (B) per 100 parts by mass of the rubber component (A). Thereby, it is possible to improve the wet gripping performance of the tire.

### <Rubber component (A)>

The rubber component (A) contained in the rubber composition necessarily contains 10 to 100 parts by mass of a modified SBR having a glass-transition temperature (Tg) of -50°C or less per 100 parts by mass of the rubber component (A), and contains other rubber components as necessary.

### <Modified styrene-butadiene copolymer rubber>

The modified SBR used in this disclosure has a Tg of -50°C or less. By using such modified SBR and the thermoplastic resin (B) described below, it is possible to improve the wet gripping performance of the tire.

A base polymer of the modified SBR (i.e., SBR) may have an appropriately adjusted ratio of 1,3-butadiene and styrene, and is preferably a copolymer obtained by polymerizing 50 mass% to 80 mass% of 1,3-butadiene and 20 mass% to 50 mass% of styrene with respect to all monomer components of the modified SBR. Thereby, it is possible to improve the wet gripping performance of the rubber composition.

A polymerization method for obtaining the base polymer is not specifically limited, and may be one conventionally known. Examples of such polymerization method include anionic polymerization, coordination polymerization and emulsion polymerization.

A modified functional group of the modified SBR is not particularly limited, and may be appropriately selected depending on the purpose. Preferable examples of the modified functional group include modified functional groups interactive with the filler as described below. By enhancing the interactivity with the filler, it is possible to further improve the wet gripping performance. A modified functional group having high interactivity with the filler (e.g., silica) is not specifically limited. Preferable examples include nitrogen containing functional groups, silicon containing functional groups and oxygen containing functional groups.

A modifier for obtaining the modified SBR may be appropriately selected from conventionally known modifiers. The modifier may be either a modifier reactive with polymerizable active terminals of anionic polymerization or coordination polymerization, or an amide moiety of a lithium amide compound used as a polymerization initiator. The modifier may be appropriately selected from conventionally known modifiers having the aforementioned modified functional group.

It is preferable that the modifier is a modifier having at least one atom selected from silicon atom, nitrogen atom or oxygen atom.

It is preferable that the modifier is one or more selected from the group consisting of alkoxysilane compounds, hydrocarbyloxy silane compounds and combinations thereof since the modifier has high interactivity with respect to the filler (e.g., silica).

The alkoxysilane compounds are not specifically limited, but are more preferably alkoxysilane compounds represented by the following general formula (I).

R¹ₐ-Si-(OR²)₄₋ₐ ... (I)

In general formula (I), R¹ and R² independently represent a C₁ to C₂₀ monovalent aliphatic hydrocarbon group or a C₆ to C₁₈ monovalent aromatic hydrocarbon group, and a is an integer of 0 to 2 and in the case where OR² is plural, each OR² may be either identical to or different from each other. Moreover, the molecule does not contain active proton.

Specific examples of the alkoxysilane compound represented by the aforementioned general formula (I) include N-(1,3-dimethylbutylidene)-3-(triethoxysilyl)-1-propaneamine, tetramethoxysilane, tetraethoxysilane, tetra-n-propoxy silane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimetridimethoxysilane, methylphenyldimethoxysilane, dimethyldiethoxysilane, vinyltrimethoxysilane, vinyltriethoxysilane, and divinyldiethoxysilane. Among these, N-(1,3-dimethylbutylidene)-3-(triethoxysilyl)-1-propaneamine, tetraethoxysilane, methyltriethoxysilane and dimethyldiethoxysilane are favorable. The alkoxysilane compounds may be used alone or in a combination of two or more.

The hydrocarbyloxy silane compound is preferably a hydrocarbyloxy silane compound represented by the following general formula (II).

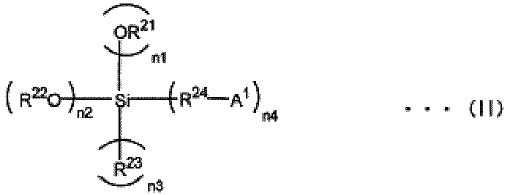

In the general formula (II), n1+n2+n3+n4=4 (where n2 is an integer of 1 to 4; n1, n3 and n4 are integers of 0 to 3); A¹ is at least one functional group selected from saturated cyclic tertiary amine compound residual group, unsaturated cyclic tertiary amine compound residual group, ketimine residual group, nitrile group, (thio)isocyanate group, (thio)epoxy group, isocyanuric acid trihydrocarbyl ester group, dihydrocarbyl carbonate ester group, nitrile group, pyridine group, (thio)ketone group, (thio)aldehyde group, amide group, (thio)carboxylic acid ester group, metallic salt of (thio)carboxylic acid ester, carboxylic anhydride residual group, carboxylic halide residual group, or primary, secondary amide group or mercapto group having hydrolyzable group, and may be either identical or different when n4 is 2 or more; A¹ may be a divalent group forming a cyclic structure by bonding with Si; R²¹ is a C₁ to C₂₀ monovalent aliphatic or alicyclic hydrocarbon group or a C₆ to C₁₈ monovalent aromatic hydrocarbon group, and may be either identical or different when n1 is 2 or more; R²³ is a C₁ to C₂₀ monovalent aliphatic or alicyclic hydrocarbon group, a C₆ to C₁₈ monovalent aromatic hydrocarbon group or a halogen atom, and may be either identical or different when n3 is 2 or more; R²² is a C₁ to C₂₀ monovalent aliphatic or alicyclic hydrocarbon group or a C₆ to C₁₈ monovalent aromatic hydrocarbon group, either one of which may contain a nitrogen atom and/or a silicon atom, and may be either identical or different, or form a ring together when n2 is 2 or more; and R²⁴ is a C₁ to C₂₀ divalent aliphatic or alicyclic hydrocarbon group, or a C₆ to C₁₈ divalent aromatic hydrocarbon group, and may be either identical or different when n4 is 2 or more.

The hydrolyzable group in the primary or secondary amino group having hydrolyzable group or the mercapto group having hydrolyzable group is preferably trimethylsilyl group or tert-butyldimethylsilyl group, more preferably trimethylsilyl group.

The hydrocarbyl oxysilane compound represented by the general formula (II) is preferably a hydrocarbyl oxysilane compound represented by the following general formula (III).

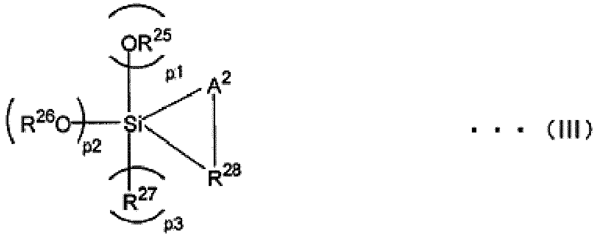

In the general formula (III), p1+p2+p3=2 (where p2 is an integer of 1 or 2, p1 and p3 are integers of 0 or 1); A² is NRa (Ra is a monovalent hydrocarbon group, hydrolyzable group or nitrogen-containing organic group) or sulfur; R²⁵ is a C₁ to C₂₀ monovalent aliphatic or alicyclic hydrocarbon group, or a C₆ to C₁₈ monovalent aromatic hydrocarbon group; R²⁷ is a C₁ to C₂₀ monovalent aliphatic or alicyclic hydrocarbon group, a C₆ to C₁₈ monovalent aromatic hydrocarbon group, or a halogen atom; R²⁶ is a C₁ to C₂₀ monovalent aliphatic or alicyclic hydrocarbon group, a C₆ to C₁₈ monovalent aromatic hydrocarbon group, or a nitrogen-containing organic group, any one of which may contain a nitrogen atom and/or a silicon atom, and may be either identical or different, or form a ring together when p2 is 2; and R²⁸ is a C₁ to C₂₀ divalent aliphatic or alicyclic hydrocarbon group or a C₆ to C₁₈ divalent aromatic hydrocarbon group. The hydrolyzable group is preferably trimethylsilyl group or tert-butyldimethylsilyl group, more preferably trimethylsilyl group.

The hydrocarbyl oxysilane compound represented by the general formula (II) is preferably a hydrocarbyl oxysilane compound represented by the following general formula (IV) or (V). Thereby, it is possible to further improve the wet gripping performance.

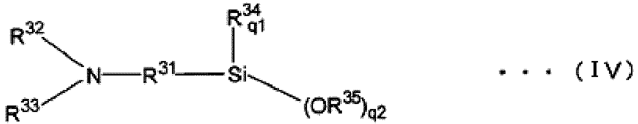

In the general formula (IV), q1+q2=3 (where q1 is an integer of 0 to 2, and q2 is an integer of 1 to 3); R³¹ is a C₁ to C₂₀ divalent aliphatic or alicyclic hydrocarbon group or a C₆ to C₁₈ divalent aromatic hydrocarbon group; R³² and R³³ are each independently a hydrolyzable group, a C₁ to C₂₀ monovalent aliphatic or alicyclic hydrocarbon group, or a C₆ to C₁₈ monovalent aromatic hydrocarbon group; R³⁴ is a C₁ to C₂₀ monovalent aliphatic or alicyclic hydrocarbon group or a C₆ to C₁₈ monovalent aromatic hydrocarbon group, and may be either identical or different when q1 is 2; R³⁵ is a C₁ to C₂₀ monovalent aliphatic or alicyclic hydrocarbon group, or a C₆ to C₁₈ monovalent aromatic hydrocarbon group, and may be either identical or different when q2 is 2 or more.

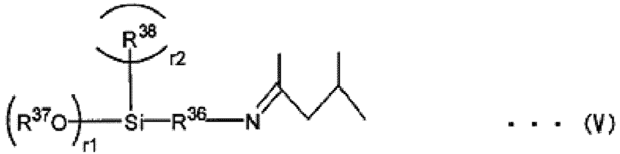

In the general formula (V), r1+r2=3 (where r1 is an integer of 1 to 3, and r2 is an integer of 0 to 2); R³⁶ is a C₁ to C₂₀ divalent aliphatic or alicyclic hydrocarbon group or a C₆ to C₁₈ divalent aromatic hydrocarbon group; R³⁷ is dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, C₁ to C₂₀ monovalent aliphatic or alicyclic hydrocarbon group, or C₆ to C₁₈ monovalent aromatic hydrocarbon group, and may be either identical or different when r1 is 2 or more; R³⁸ is a C₁ to C₂₀ hydrocarbyloxy group, a C₁ to C₂₀ monovalent aliphatic or alicyclic hydrocarbon group, or a C₆ to C₁₈ monovalent aromatic hydrocarbon group, and may be either identical or different when r2 is 2.

The hydrocarbyl oxysilane compound represented by the general formula (II) is preferably a hydrocarbyl oxysilane compound having two or more nitrogen atoms represented by the following general formula (VI) or (VII). Thereby, it is possible to further improve the wet gripping performance.

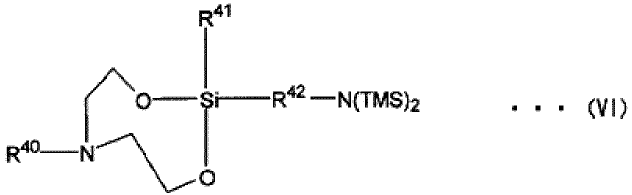

In general formula (VI), R⁴⁰ is trimethylsilyl group, a C₁ to C₂₀ monovalent aliphatic or alicyclic hydrocarbon group, or a C₆ to C₁₈ monovalent aromatic hydrocarbon group; R⁴¹ is a C₁ to C₂₀ hydrocarbyloxy group, a C₁ to C₂₀ monovalent aliphatic or alicyclic hydrocarbon group, or a C₆ to C₁₈ monovalent aromatic hydrocarbon group; and R⁴² is a C₁ to C₂₀ divalent aliphatic or alicyclic hydrocarbon group, or a C₆ to C₁₈ divalent aromatic hydrocarbon group.

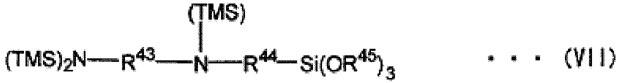

In the general formula (VII), R⁴³ and R⁴⁴ are independently a C₁ to C₂₀ divalent aliphatic or alicyclic hydrocarbon group or a C₆ to C₁₈ divalent aromatic hydrocarbon group; R⁴⁵ is a C₁ to C₂₀ monovalent aliphatic or alicyclic hydrocarbon group or a C₆ to C₁₈ monovalent aromatic hydrocarbon group, and each R⁴⁵ may be identical or different.

The hydrocarbyl oxysilane compound represented by the general formula (II) is preferably a hydrocarbyl oxysilane compound represented by the following general formula (VIII).

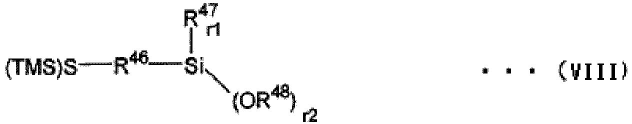

In the general formula (VIII), r1+r2=3 (where r1 is an integer of 0 to 2, and r2 is an integer of 1 to 3); R⁴⁶ is a C₁ to C₂₀ divalent aliphatic or alicyclic hydrocarbon group or a C₆ to C₁₈ divalent aromatic hydrocarbon group; R⁴⁷ and R⁴⁸ are independently a C₁ to C₂₀ monovalent aliphatic or alicyclic hydrocarbon group or a C₆ to C₁₈ monovalent aromatic hydrocarbon group. Each R⁴⁷ or R⁴⁸ may be either identical or different.

The hydrocarbyl oxysilane compound represented by the general formula (II) is preferably a hydrocarbyl oxysilane compound represented by the following general formula (IX).

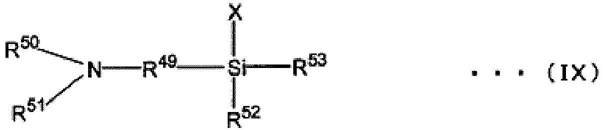

In the general formula (IX), X is a halogen atom; R⁴⁹ is a C₁ to C₂₀ divalent aliphatic or alicyclic hydrocarbon group or a C₆ to C₁₈ divalent aromatic hydrocarbon group; R⁵⁰ and R⁵¹ are independently a hydrolyzable group, a C₁ to C₂₀ monovalent aliphatic or alicyclic hydrocarbon group or a C₆ to C₁₈ monovalent aromatic hydrocarbon group, or alternatively, R⁵⁰ and R⁵¹ are bonded to form a divalent organic group; R⁵² and R⁵³ are independently a halogen atom, a hydrocarbyloxy group, a C₁ to C₂₀ monovalent aliphatic or alicyclic hydrocarbon group, or a C₆ to C₁₈ monovalent aromatic hydrocarbon group. R⁵⁰ and R⁵¹ are preferably hydrolyzable groups, and as the hydrolyzable group, trimethylsilyl group or tert-butyl dimethylsilyl group is preferable, and trimethylsilyl group is more preferable.

The hydrocarbyl oxysilane compound represented by the general formula (II) is preferably a hydrocarbyl oxysilane compound having a structure represented by the following general formulae (X) to (XIII).

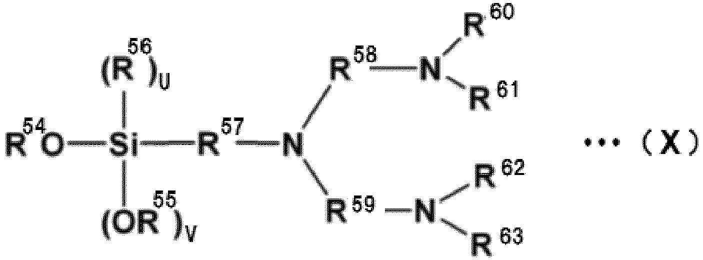

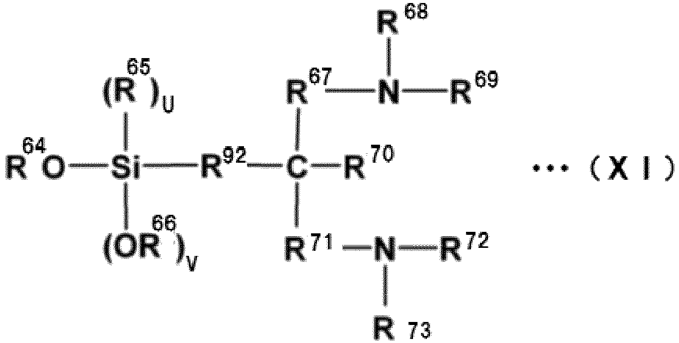

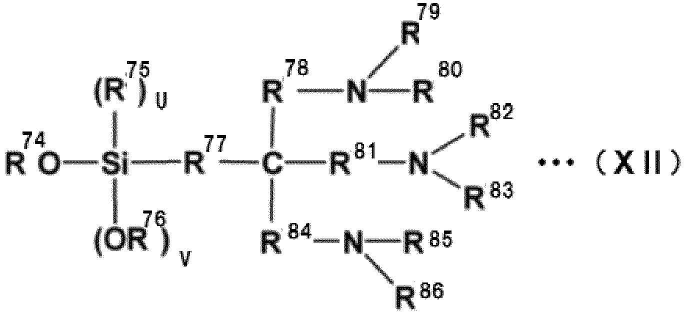

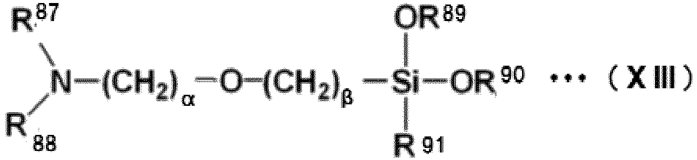

In general formulae (X) to (XIII), the signs U, V are respectively integers of 0 to 2 which satisfy U+V=2. R⁵⁴ to R⁹² in general formulae (X) to (XIII) may be either identical or different, and are C₁ to C₂₀ divalent aliphatic or alicyclic hydrocarbon group or C₆ to C₁₈ divalent aromatic hydrocarbon group. Moreover, α and β in general formula (XIII) are integers of 0 to 5.

Among compounds represented by general formulae (X) to (XII), in particular, N1,N1,N7-tetramethyl-4-((trimethoxysilyl)methyl)-1,7heptane, 2-((hexyl-dimethoxysilyl)methyl)-N1,N1,N3,N3-2-pentamethylpropane-1,3-di amine, N1-(3-(dimethylamino)propyl-N3,N3-dimethyl-N1-(3-(trimethoxysilyl)propyl )propane-1,3-diamine and 4-(3-(dimethylamino)propyl)-N1,N1,N7,N7-tetramethyl-4-((trimethoxysilyl) methyl)heptane-1,7-diamine are preferable.

Among compounds represented by general formula (XIII), in particular, N,N-dimethyl-2-(3-(dimethoxymethylsilyl)propoxy)ethaneamine, N,N-bis(trimethylsilyl)-2-(3-(trimethoxysilyl)propoxy)ethaneamine, N,N-dimethyl-2-(3-(trimethoxysilyl)propoxy)ethaneamine and N,N-dimethyl-3-(3-(trimethoxysilyl)propoxy)propane-1-amine are preferable.

The hydrocarbyloxy silane compounds represented by general formulae (II) to (XIII) are preferably used as a modifier of the modified SBR, but may be used as a modifier of any other rubber component as well.

The hydrocarbyl oxysilane compounds represented by general formulae (II) to (XIII) are preferably alkoxysilane compounds.

Specific examples of modifiers preferable in the case where a modified copolymer is obtained via anionic polymerization include at least one compound selected from 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone or 1-methyl-2-pyrrolidone.

The modifier is preferably an amide moiety of a lithium amide compound used as a polymerization initiator in anionic polymerization. Examples of such lithium amide compound include lithium hexamethyleneimide, lithium pyrrolizide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, lithium methylphenethylamide, and combinations thereof. For example, the modifier as the amide moiety of lithium hexamethyleneimide is hexamethyleneimine, the modifier as the amide moiety of lithium pyrrolizide is pyrrolidine, and the modifier as the amide moiety of lithium piperidide is piperidine.

Preferable examples of the modifier in the case where the modified copolymer is obtained via coordination polymerization include at least one compound selected from 2-cyanopyridine or 3,4-ditrimethylsilyloxy benzaldehyde.

Preferable examples of the modifier in the case where the modified copolymer is obtained via emulsion polymerization include at least one compound selected from 3,4-ditrimethylsilyloxy benzaldehyde or 4-hexamethylene iminoalkyl styrene. These modifiers preferably used in emulsion polymerization are preferably copolymerized during emulsion polymerization as a monomer containing nitrogen atom and/or silicon atom.

The modification ratio of the modified SBR is not specifically limited and may be appropriately adjusted depending on the purpose. The modification ratio is, e.g., preferably 30% or more, more preferably 35% or more, particularly preferably 70% or more. Thereby, the filler containing silica exists selectively in the phase of the modified SBR, which further improves the wet gripping performance.

The glass-transition temperature (Tg₂) of the modified SBR is necessarily -50°C or less, preferably -60°C or less.

An example of the modified SBR is described here. First, a copolymer of styrene and 1,3-butadiene (microstructure: 10 mass% of styrene / 40 mass% of vinyl bond amount derived from 1,3-butadiene, base molecular weight (polystyrene equivalent): 180,000) is prepared as a base polymer, and is modified with its terminals being anions by using N,N-bis(trimethylsilyl)-3-[diethoxy(methyl)silyl]propylamine, to obtain a modified SBR (modification ratio: 70%, weight-average molecular weight (Mw): 200,000).

A compounding amount of the modified SBR is 10 to 100 parts by mass per 100 parts by mass of the rubber component (A).

### <Other rubber components>

The rubber component (A) may contain other rubber components as long as containing 10 to 100 parts by mass of the modified SBR per 100 parts by mass of the rubber component (A). The other rubber components may be appropriately selected from conventionally known rubber polymers, such as natural rubber, isoprene rubber, styrene-butadiene rubber, butadiene rubber and the like. Moreover, the other rubber components may be the ones mentioned in the aforementioned modified SBR. Polymers as the other rubber components may be either unmodified (co)polymers or modified (co)polymers.

### <Natural rubber>

The natural rubber is not specifically limited and may be appropriately selected from conventionally known natural rubbers. Natural rubber has high compatibility with the thermoplastic resin (B) described below, and thus is advantageous from the viewpoint of enhancing the compatibility of the rubber component (A) and the thermoplastic resin (B).

A molecular weight of the natural rubber is not specifically limited. By setting the peak molecular weight to 50,000 or more, good breaking resistance and wear resistance can be obtained, and by setting the same to 700,000 or less, good processability can be obtained. Further, in order to achieve both the breaking resistance, the wear resistance and the processability at a high degree, it is preferable that a peak molecular weight is 100,000 to 350,000.

A compounding amount of the natural rubber may be appropriately adjusted. In the rubber composition according to this disclosure, it is preferable that the rubber component (A) contains 60 to 90 parts by mass of natural rubber. Thereby, it is possible to obtain excellent wet gripping performance and breaking resistance.

In the rubber composition according to this disclosure, it is preferable that the glass-transition temperature Tg₁ of the natural rubber and the glass-transition temperature Tg₂ of the modified SBR satisfies a relation that 0 < |Tg₁-Tg₂| ≤ 20, and the natural rubber and the modified SBR are phase-separated in sub-micron order. Thereby, it is possible to obtain the wet gripping performance and the breaking resistance.

**In** the case where the natural rubber and the modified SBR are phase-separated as described above, the domain width of the phase of the modified SBR is not specifically limited, but is preferably 200 nm or less. Thereby, it is possible to obtain better wet gripping performance and breaking resistance.

In the case where the natural rubber and the modified SBR are phase-separated in sub-micron order, it is preferable that the average aggregate area of the filler (C) existing in the phase of the modified SBR is 2100 nm² or less. Thereby, it is possible to obtain the wet gripping performance and the breaking resistance.

For the purpose that the relation that 0 < |Tg₁-Tg₂| ≤ 20 is satisfied and the natural rubber and the modified SBR are phase-separated in sub-micron order, for example, it is preferable that an SP value (SP₁) of the natural rubber and an SP value (SP₂) of the modified SBR are different, satisfying 0.15 < |SP₁-SP₂|. Thereby, those can be easily separated into different phases in sub-micron order.

### <Thermoplastic resin (B)>

The thermoplastic resin (B) is at least one selected from C₅ based resin, C₅ to C₉ based resin, C₉ based resin, terpene based resin, terpene-aromatic compound based resin, rosin based resin, dicyclopentadiene resin or alkylphenol based resin. By containing the thermoplastic resin (B) at a specific amount in the rubber composition, Tg of the rubber is raised and the loss tangent (tan*δ*) at 0°C is improved, which improves the wet gripping performance of the tire.

A compounding amount of the thermoplastic resin (B) may be appropriately adjusted as long as being 5 to 30 parts by mass of the thermoplastic resin (B) per 100 parts by mass of the rubber component (A). By setting the compounding amount of the thermoplastic resin (B) to 5 to 30 parts by mass, it is possible to improve the wet gripping performance.

### <C₅ based resin>

The C₅ based resin refers to a C₅ based synthetic petroleum resin, which is a resin obtained by polymerizing a C₅ fraction using a catalyst for the Friedel-Crafts reaction, such as AlCl₃, BF₃ and the like. Specific examples thereof may include: a copolymer including, as main components, isoprene, cyclopentadiene, 1,3-pentadiene, and 1-pentene; a copolymer of 2-pentene and dicyclopentadiene; a polymer mainly composed of 1,3-pentadiene, etc.

### <C₅ to C₉ based resin>

The C₅ to C₉ based resin refers to a C₅ to C₉ based synthetic petroleum resin, which is a resin obtained by polymerizing a C₅ to C₁₁ fraction using a catalyst for the Friedel-Crafts reaction, such as AlCl₃, BF₃ and the like. Specific examples thereof may include a copolymer including, as main components, styrene, vinyltoluene, α-methylstyrene, indene, etc. Among these, a C₅ to C₉ based resin having a small amount of a component of C₉ or more is preferable from the viewpoint of excellent compatibility with the rubber component (A). Specifically, a resin having a ratio of a component of C₉ or more in the C₅ to C₉ based resin of less than 50 mass% is preferable, and a resin having a ratio of 40 mass% or less is more preferable.

### <C₉ based resin>

The C₉ based resin refers to a C₉ based synthetic petroleum resin, which is a resin obtained by polymerizing a C₉ fraction using a catalyst for the Friedel-Crafts reaction, such as AlCl₃, BF₃ and the like. Specific examples thereof may include a copolymer including, as main components, indene, methylindene, α-methylstyrene, vinyltoluene, etc.

### <Terpene based resin>

The aforementioned terpene-based resin is a solid-state resin obtained by compounding turpentine to be obtained simultaneously in obtaining rosin from trees of Pinus, or a polymerizable component separated from the turpentine, and by polymerizing the turpentine or the polymerizable component using a catalyst for the Friedel-Crafts reaction. Examples of the terpene-based resin may include: β-pinene resins; and α-pinene resins.

### <Terpene-aromatic compound based resin>

The terpene-aromatic compound based resin may be obtained through various methods including: causing terpenoids and various phenols to react with each other using a catalyst for the Friedel-Crafts reaction, or further condensing the resultant with formalin. Examples include terpene-phenol resin. Among terpene-phenol resins, a terpene-phenol resin containing less than 50 mass% of a phenol component in the resin is preferable, and a resin containing 40 mass% or less is more preferable. Terpenoids for use as the material are not specifically limited and may be appropriately selected depending on the purpose. Examples include. Examples include a monoterpene hydrocarbon such as α-pinenes and limonenes. Among these, terpenoids including α-pinenes are preferable, and α-pienes are particularly preferable.

### <Rosin based resin>

The rosin based resin is not particularly limited, and may be appropriately selected depending on the purpose. The rosin based resin include: natural resin rosins such as gum rosin, tall oil rosin and wood rosin contained in raw rosin or tall oil; modified rosin; and rosin derivative. Examples of modified rosin derivative include: polymerized rosin, partially hydrogenated rosin thereof; glycerin ester rosin, partially hydrogenated rosin and completely hydrogenated rosin thereof; pentaerythritol ester rosin, partially hydrogenated rosin and polymerized rosin thereof, etc.

### <Dicyclopentadiene resin>

The dicyclopentadiene resin may be obtained by polymerizing dicyclopentadiene using a catalyst for the Friedel-Crafts reaction, such as AlCl₃, BF₃ and the like. Specific examples include "Quinton 1920" (manufactured by Zeon Corporation), "Quinton 1105" (manufactured by Zeon Corporation), and "Marcarez M-890A" (manufactured by Maruzen Petrochemical Co., Ltd.).

### <Alkylphenol based resin>

The alkylphenol based resin is not particularly limited, and may be appropriately selected depending on the purpose. Examples of the alkylphenol based resin include alkylphenol-acetylene resin such as p-tert-butylphenol-acetylene resin and alkylphenol-formaldehyde resin with a low degree of polymerization.

### <Filler (C)>

The filler (C) may contain components such as silica, carbon black, aluminum oxide, clay, alumina, talc, mica, kaolin, glass balloon, glass beads, calcium carbonate, magnesium carbonate, magnesium hydroxide, calcium carbonate, magnesium oxide, titanium oxide, potassium titanate, barium sulfate and the like. By containing silica in the filler (C), it is possible to apply reinforcement performance and low loss property.

In the rubber composition according to this disclosure, the filler (C) preferably contains 70 mass% or more, more preferably 90% or more of silica. It is preferable that the filler (C) contains 90 mass% or more of silica with respect to a total amount of carbon black and silica. Thereby, it is possible to further improve the wet gripping performance.

A compounding amount of the filler (C) is not specifically limited and may be appropriately adjusted. The compounding amount of the filler (C) is preferably 30 to 100 parts by mass, more preferably 40 to 80 parts by mass per 100 parts by mass of the rubber component.

### <Silica>

The silica contained in the filler (C) is not particularly limited, and may be appropriately selected depending on the purpose. Examples of the silica include wet silica (hydrous silicate), dry silica (anhydrous silicic acid), calcium silicate, aluminum silicate, and the like. These may be used alone or in a combination of two or more. Among these, wet silica is advantageous from the viewpoint of improving the wet gripping performance. A BET specific surface area of the silica may be, e.g., 70 m²/g to 280 m²/g. Alternatively, the BET specific surface area of the silica may be, e.g., 75 m²/g to 110 m²/g, 220 m²/g to 270 m²/g, or a combination thereof. A CBAT specific surface area of the silica may be, e.g., 70 m²/g to 210 m²/g. Alternatively, the CBAT specific surface area of the silica may be, e.g., 75 m²/g to 130 m²/g, 170 m²/g to 210 m²/g, or a combination thereof.

It is preferable that the filler (C) further contains carbon black. A compounding amount of the carbon black is preferably 1 to 10 parts by mass, more preferably 3 to 8 parts by mass per 100 parts by mass of the rubber component (A).

The carbon black is not specifically limited and may be appropriately selected from conventionally known carbon blacks. Examples include carbon black of GPF, FEF, HAF, ISAF, SAF grade. The carbon black may be used alone or in a combination of two or more.

Other than the rubber component (A), the thermoplastic resin (B) and the filler (C), the rubber composition may contain compounding ingredients generally used in the rubber industry, such as a softener(D), a silane coupling agent (E), fatty acid metal salt, stearic acid, anti-aging agent, zinc oxide, vulcanization accelerator, vulcanizing agent and the like. Commercially available products may be suitably used as these additives.

### <Softener (D)>

From the viewpoint of the processability and the operability, the rubber composition may further contain a softener (D). Examples of the softener (D) include mineral oil derived from mineral, aromatic oil, paraffin oil and naphthene oil derived from petroleum, and palm oil derived from natural product. Among these, from the viewpoint of the wet gripping performance of the tire, a softener derived from mineral and a softener derived from petroleum are preferable. The softener may be used alone or in a combination of two or more.

A compounding amount of the softener (D) may be appropriately adjusted, but is preferably in a range of 1 to 5 parts by mass, more preferably in a range of 1.5 to 3 parts by mass per 100 parts by mass of the rubber component.

### <Silane coupling agent (E)>

In order to improve the compounding effect of silica, it is preferable that the rubber composition further contains a silane coupling agent.

The silane coupling agent (E) is not specifically limited and may be appropriately selected from conventionally known silane coupling agents. Examples of the silane coupling agent include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3 -trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, and dimethoxymethylsilylpropylbenzothiazolyl tetrasulfide. These silane coupling agents may be used alone or in a combination of two or more.

A compounding amount of the silane coupling agent (E) is preferably in a range of 2 to 20 parts by mass, more preferably a range of 5 to 15 parts by mass per 100 parts by mass of silica. By setting the compounding amount of the silane coupling agent to 2 parts by mass or more per 100 parts by mass of silica, the compounding effect of silica is sufficiently improved, and by setting the compounding amount of the silane coupling agent to 20 parts by mass or less per 100 parts by mass of silica, the probability of gelation of the rubber component is lowered.

The rubber composition preferably further contains a fatty acid metal salt. Examples of a metal used in the fatty acid metal salt include Zn, K, Ca, Na, Mg, Co, Ni, Ba, Fe, Al, Cu, and Mn, where Zn is preferable. Examples of a fatty acid used in the fatty acid metal salt include C₄ to C₃₀ saturated or unsaturated, straight chain, branched or cyclic fatty acids, or a mixture thereof. Among these, a C₁₀ to C₂₂ saturated or unsaturated straight chain fatty acid is preferable. Examples of the C₁₀ to C₂₂ saturated straight chain fatty acid include lauric acid, myristic acid, palmitic acid, and stearic acid. Moreover, examples of the C₁₀ to C₂₂ unsaturated straight chain fatty acid include oleic acid, linoleic acid, linolenic acid, and arachidonic acid. The fatty acid metal salts may be used alone or in a combination of two or more.

A compounding amount of the fatty acid metal salt is preferably in a range of 0.1 to 10 parts by mass, more preferably in a range of 0.5 to 5 parts by mass per 100 parts by mass of the rubber component (A).

### <Method for producing rubber composition>

The method for producing a rubber composition according to this disclosure is a method for producing the aforementioned rubber composition, including kneading the rubber component (A), the thermoplastic resin (B) and the filler (C) at 150°C to 165°C, without vulcanizing type compounding ingredients including the vulcanizing agent or the vulcanization accelerator. Thereby, it is possible to produce a rubber composition capable of improving the wet gripping performance of the tire.

By kneading at 150°C to 165°C without the vulcanizing type compounding ingredients, it is possible to avoid scorching and to uniformly disperse compounding ingredients other than the vulcanizing type compounding ingredients in the rubber component (A). Thereby, the compounding effect of each compounding ingredient is sufficiently exhibited, which lowers tan*δ* at 0°C of the rubber composition.

In the method for producing a rubber composition according to this disclosure, the kneading may be performed at another temperature less than 150°C after kneading at 150°C to 165°C.

In the method for producing a rubber composition according to this disclosure, it is preferable that after the compounding ingredients other than the vulcanizing type compounding ingredients are sufficiently uniformly dispersed in the rubber component (A), the vulcanizing type compounding ingredients including the vulcanizing agent or the vulcanization accelerator are kneaded at a temperature capable of avoiding scorching such as 90°C to 120°C.

In the kneading at each temperature, the kneading time is not limited, and may be appropriately set regarding the size of the kneading apparatus, the volume of the raw material, the type and state, of the raw material, etc.

The vulcanizing agent is not specifically limited, and may be appropriately selected from conventionally known vulcanizing agents. Examples of the vulcanizing agent include sulfur.

A compounding amount of the vulcanizing agent is preferably within a range of 0.1 to 10.0 parts by mass, more preferably 1.0 to 4.0 parts by mass, per 100 parts by mass of the rubber component (A) in terms of sulfur. If the compounding amount of the vulcanizing agent is 0.1 parts by mass or more in terms of sulfur, it is possible to ensure the fracture strength, the wear resistance, etc. of the vulcanized rubber, and if 10.0 parts by mass or less, it is possible to sufficiently ensure the rubber elasticity.

The vulcanization accelerator is not specifically limited, and may be appropriately selected from conventionally known vulcanization accelerators such as guanidines, sulfenamides, thiazoles, etc. Use of guanidines, sulfenamides or thiazoles as the vulcanization accelerator is advantageous from the viewpoint of enhancing the activity of the silane coupling agent. The vulcanization accelerators may be used alone or in a combination of two or more.

### <Guanidines>

Examples of the guanidines include 1,3-diphenylguanidine, 1,3-di-o-tolylguanidine, 1-o-tolylbiguanide, di-o-tolylguanidine salt of dicatechol borate, 1,3-di-o-cumenylguanidine, 1,3-di-o-biphenylguanidine, and 1,3-di-o-cumenyl-2-propionylguanidine. These may be used alone or in a combination of two or more. Among these, from the viewpoint of higher reactivity, 1,3-diphenylguanidine, 1,3-di-o-tolylguanidine and 1-o-tolylbiguanide are preferable, and 1,3-diphenylguanidine is more preferable.

### <Sulfenamides>

The sulfenamides are not specifically limited and may be appropriately selected depending on the purpose. Examples of the sulfenamides include N-cyclohexyl-2-benzothiazolylsulfenamide, N,N-dicyclohexyl-2-benzothiazolylsulfenamide, N-tert-butyl-2-benzothiazolylsulfenamide, N-oxydiethylene-2-benzothiazolylsulfenamide, N-methyl-2-benzothiazolylsulfenamide, N-ethyl-2-benzothiazolylsulfenamide, N-propyl-2-benzothiazolylsulfenamide, N-butyl-2-benzothiazolylsulfenamide, N-pentyl-2-benzothiazolylsulfenamide, N-hexyl-2-benzothiazolylsulfenamide, N-octyl-2-benzothiazolylsulfenamide, N-2-ethylhexyl-2-benzothiazolylsulfenamide, N-decyl-2-benzothiazolylsulfenamide, N-dodecyl-2-benzothiazolylsulfenamide, N-stearyl-2-benzothiazolylsulfenamide, N,N-dimethyl-2-benzothiazolylsulfenamide, N,N-diethyl-2-benzothiazolylsulfenamide, N,N-dipropyl-2-benzothiazolylsulfenamide, N,N-dibutyl-2-benzothiazolylsulfenamide, N,N-dipentyl-2-benzothiazolylsulfenamide, N,N-dihexyl-2-benzothiazolylsulfenamide, N,N-dioctyl-2-benzothiazolylsulfenamide, N,N-di-2-ethylhexylbenzothiazolylsulfenamide, N,N-didodecyl-2-benzothiazolylsulfenamide, and N,N-distearyl-2-benzothiazolylsulfenamide. These may be used alone or in a combination of two or more. Among these, from the viewpoint of higher reactivity, N-cyclohexyl-2-benzothiazolylsulfenamide and N-tert-butyl-2-benzothiazolylsulfenamide are preferable.

### <Thiazoles>

The thiazoles are not particularly limited, and may be appropriately selected depending on the purpose. Examples of the thiazoles include 2-mercaptobenzothiazole, di-2-benzothiazolyldisulfide, zinc salt of 2-mercaptobenzothiazole, cyclohexylamine salt of 2-mercaptobenzothiazole, 2-(N,N-diethylthiocarbamoylthio)benzothiazole, 2-(4'-morpholinodithio)benzothiazole, 4-methyl-2-mercaptobenzothiazole, di-(4-methyl-2-benzothiazolyl)disulfide, 5-chloro-2-mercaptobenzothiazole, sodium 2-mercaptobenzothiazole, 2-mercapto-6-nitrobenzothiazole, 2-mercapto-naphtho[1,2-d]thiazole, 2-mercapto-5-methoxybenzothiazole, 6-amino-2-mercaptobenzothiazole, etc. These may be used alone or in a combination of two or more. Among these, from the viewpoint of higher reactivity, 2-mercaptobenzothiazole and di-2-benzothiazolyldisulfide are preferable.

A compounding amount of the vulcanization accelerator is preferably in a range of 0.1 to 5.0 parts by mass, more preferably in a range of 0.2 to 3.0 parts by mass per 100 parts by mass of the rubber component (A).

The method for producing a rubber composition according to this disclosure may be, e.g., as mentioned above, compounding the thermoplastic resin (B), the filler (C), and appropriately selected various compounding ingredients as necessary, to the rubber component (A) by using a Banbury mixer or a roll, and kneading, warming, extrusion, etc.

### <Tire>

The tire according to this disclosure uses the aforementioned rubber composition for a tread rubber. The tire of this disclosure is a tire having improved wet gripping performance.

The method for producing a tire according to this disclosure is not specifically limited and may be a conventionally known method for producing a tire, as long as a rubber composition obtained with the aforementioned producing method is used for a tread rubber. For example, a tire may be produced by shaping a green tire by using a rubber composition obtained with the aforementioned producing method for a tread rubber, and vulcanizing the green tire.

### EXAMPLES

In the following, the present disclosure is described in detail with reference to Examples. However, the present disclosure is no way limited to Examples in below.

Details of the materials used in the examples is as follows.

### (Rubber component A)

Natural rubber (NR): RSS#3, Tg₂ = -73°C

### Modifier 1:

N,N-bis(trimethylsilyl)-3-[diethoxy(methyl)silyl]propylamine, corresponding to the hydrocarbyloxy silane compound of general formula (IV)

### (Thermoplastic resin B)

C₉ based resin: trade name "Nisseki Neopolymer 140", manufactured by JX Nippon Oil & Energy Corporation
Dicyclopentadiene resin (DCPD): trade name "Quinton 1105", manufactured by Zeon Corporation
C₅ to C₉ based resin: trade name "ECR213", manufactured by ExxonMobil Chemical Company
C₅ based resin: trade name "Escorez" (Escorez is a registered trademark in Japan, other countries, or both) 1102B, manufactured by ExxonMobil Chemical Company

### (Filler C)

Silica: trade name "NipSil AQ", manufactured by Tosoh Silica Corporation

### (Softener D)

Process oil: trade name "A/O Mix", manufactured by Sankyo Yuka Kogyo K.K.

### (Silane coupling agent E)

Silane coupling agent: bis(3-triethoxysilylpropyl) disulfide, trade name "Si75", manufactured by Evonik Degussa Corporation

### (Others)

Anti-aging agent: N-(1,3-dimethylbutyl)-N'-phenyl-p-phenylenediamine, trade name "NOCRAC 6C", manufactured by Ouchi Shinko Chemical Industrial Co., Ltd.
Wax: microcrystalline wax, trade name "Ozoace0701", manufactured by Nippon Seiro Co., Ltd.
Vulcanization accelerator 1: bis(2-benzothiazolyl)persulfide, trade name "NOCCELER DM-P", manufactured by Ouchi Shinko Chemical Industrial Co., Ltd.
Vulcanization accelerator 2: 1,3-diphenylguanidine, trade name "NOCCELER D", manufactured by Ouchi Shinko Chemical Industrial Co., Ltd.
Vulcanization accelerator 3: N-(tert-butyl)-2-benzothiazole sulfenamide, trade name "Sanceler NS-G", manufactured by Sanshin Chemical Industry Co., Ltd.

### (Preparation of modified SBR)

A cyclohexane solution of 1,3-butadiene and a cyclohexane solution of styrene were charged in a dry, nitrogen-purged pressure-resistant glass vessel (800 mL), such that 1,3-butadiene monomer was 67.5 g and styrene was 7.5 g; 0.6 mmol of 2,2-di(tetrahydrofuryl)propane and 0.8 mmol of n-butyllithium were added thereto; then polymerization was performed at 50°C for 1.5 hours. With respect to the polymerization reaction system of which the polymerization conversion rate was approximately 100% at this time, 0.72 mmol of the modifier was added, and modification reaction was performed at 50°C for 30 minutes. Afterward, 2 mL of 5 mass% 2,6-di-t-butyl-p-cresol (BHT) in isopropanol was added to terminate the reaction, and the modified SBR was obtained by drying with an ordinary method. As a result of measuring the microstructure of the obtained modified SBR, the bound styrene content was 10 mass%, the vinyl content of the butadiene moiety was 40%, and the peak molecular weight was 200,000.

### (Preparation of comparative unmodified SBR)

An unmodified modified SBR was obtained by performing a polymerization reaction similarly as the modified SBR, except that the polymerization reaction was performed without performing the modification reaction. As a result of measuring the microstructure of the obtained unmodified SBR, the bound styrene content was 10 mass%, the vinyl content of the butadiene moiety was 40%, and the peak molecular weight was 200,000.

In addition to the formulation indicated in Table 1, the rubber compositions were prepared by compounding the following components as well.
Process oil: 1.0 parts by mass
Stearic acid: 2 parts by mass
Anti-aging agent: 1 part by mass
Wax: 2 parts by mass
Zinc oxide: 2.5 parts by mass
Vulcanization accelerator 1: 1.2 parts by mass
Vulcanization accelerator 2: 1.2 parts by mass
Vulcanization accelerator 3: 1 part by mass
Sulfur: 1.8 parts by mass

Regarding each obtained rubber composition, the wet gripping performance and the breaking resistance was evaluated as follows. The results are as indicated in Table 1.

**[Table 1]**

| | | | Comparative Example 1 | Comparative Example 2 | Comparative Example 3 | Example 1 | Example 2 | Example 3 | Example 4 | Example 5 | Example 6 | Example 7 | Example 8 |
|---|---|---|---|---|---|---|---|---|---|---|---|---|---|
| Formulation (parts by mass) | Rubber component (A) | Modified SBR (Tg₂ = -70°C) | - | - | 100 | 100 | 60 | 30 | 30 | 30 | 30 | 30 | 30 |
| | | Unmodified SBR (Tg₂ = -70°C) | 100 | 100 | - | - | - | - | - | - | - | - | - |
| | | Natural rubber (Tg₁ = -73°C) | - | - | - | - | 40 | 70 | 70 | 70 | 70 | 70 | 70 |
| | Thermoplastic resin (B) | C₉ based resin | 15 | - | - | 15 | 15 | 15 | 20 | 10 | - | - | - |
| | | DCPD resin | - | - | - | - | - | - | - | - | 15 | - | - |
| | | C₅ to C₉ based resin | - | - | - | - | - | - | - | - | - | 15 | - |
| | | C₅ based resin | - | - | - | - | - | - | - | - | - | - | 15 |
| | (Filler C) | Silica | 55 | 55 | 55 | 55 | 55 | 55 | 55 | 55 | 55 | 55 | 55 |
| | Silane coupling agent (E) | | 5 | 5 | 5 | 5 | 5 | 5 | 5 | 5 | 5 | 5 | 5 |
| Performance evaluation | Wet gripping performance | | 100 | 98 | 98 | 105 | 104 | 107 | 109 | 106 | 107 | 109 | 110 |
| | Breaking resistance | | 100 | 100 | 100 | 100 | 105 | 110 | 107 | 112 | 110 | 110 | 110 |

### <Performance evaluation>

### Wet gripping performance

The obtained rubber composition was vulcanized at 145°C for 33 minutes, and a vulcanized rubber obtained thereby was measured of a resistance value of a specimen (vulcanized rubber) with respect to a wet concrete road surface by using a British Portable Skid Tester. The results thereof were indexed, with the value of Comparative Example 1 as 100. A larger value indicates better wet gripping performance.

### Breaking resistance

Each vulcanized rubber obtained by vulcanizing each rubber composition at 145°C for 33 minutes was subjected to tensile test at room temperature according to JIS K 6251, to measure the tensile strength of the vulcanized rubber composition. The evaluation result was indexed with the value of Comparative Example 1 as 100. A larger value indicates better breaking resistance.

As compared to Comparative Example 1 which used an unmodified SBR, Example 1, which used a modified SBR, had improved wet gripping performance. As compared to Comparative Example 1, Comparative Example 2, which did not use the thermoplastic resin (B), had deteriorated wet gripping performance. Moreover, Comparative Example 3, in which the unmodified SBR of Comparative Example 2 was changed to a modified SBR, did not have improved performances. As compared to Example 1, Examples 2 to 8, which used natural rubber together, exhibited excellent wet gripping performance and breaking resistance.

### INDUSTRIAL APPLICABILITY

According to this disclosure, it is possible to provide a rubber composition capable of improving the wet gripping performance of the tire. Moreover, according to this disclosure, it is possible to provide a tire having improved wet gripping performance.

## Claims

1. A rubber composition comprising a rubber component (A), a thermoplastic resin (B), and a filler (C), wherein:
the rubber component (A) contains 10 to 100 parts by mass of a modified styrene-butadiene copolymer rubber having a glass-transition temperature (Tg) of -50°C or less per 100 parts by mass of the rubber component (A); and
the rubber composition contains 5 to 30 parts by mass of the thermoplastic resin (B) per 100 parts by mass of the rubber component (A).

2. The rubber composition according to claim 1, wherein:
the rubber component (A) contains 60 to 90 parts by mass of natural rubber.

3. The rubber composition according to claim 1 or 2, wherein:
the filler (C) contains 70 mass% or more of silica.

4. The rubber composition according to claim 2 or 3, wherein:
a glass-transition temperature Tg₁ of the natural rubber and a glass-transition temperature Tg₂ of the modified styrene-butadiene copolymer rubber satisfy a relation that 0 < |Tg₁-Tg₂| ≤ 20; and
the natural rubber and the modified styrene-butadiene copolymer rubber are phase-separated in sub-micron order.

5. The rubber composition according to any one of claims 2 to 4, wherein:
a domain width of a phase of the modified styrene-butadiene copolymer rubber is 200 nm or less.

6. The rubber composition according to any one of claims 2 to 5, wherein:
an average aggregate area of the filler (C) existing in the phase of the modified styrene-butadiene copolymer rubber is 2100 nm² or less.

7. The rubber composition according to any one of claims 1 to 5, wherein:
the modified styrene-butadiene copolymer rubber is modified with:
a hydrocarbyl oxysilane compound represented by the following general formula (IV): 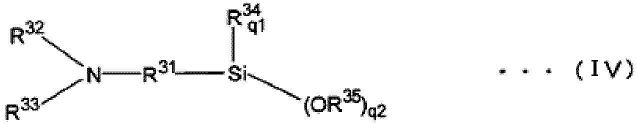 where q1+q2=3, with q1 being an integer of 0 to 2 and q2 being an integer of 1 to 3; R³¹ is a C₁ to C₂₀ divalent aliphatic or alicyclic hydrocarbon group or a C₆ to C₁₈ divalent aromatic hydrocarbon group; R³² and R³³ are independently a hydrolyzable group, a C₁ to C₂₀ monovalent aliphatic or alicyclic hydrocarbon group, or a C₆ to C₁₈ monovalent aromatic hydrocarbon group; R³⁴ is a C₁ to C₂₀ monovalent aliphatic or alicyclic hydrocarbon group or a C₆ to C₁₈ monovalent aromatic hydrocarbon group, and may be either identical or different when q1 is 2; R³⁵ is a C₁ to C₂₀ monovalent aliphatic or alicyclic hydrocarbon group, or a C₆ to C₁₈ monovalent aromatic hydrocarbon group, and may be either identical or different when q2 is 2 or more; or
a hydrocarbyl oxysilane compound represented by the following general formula (V): 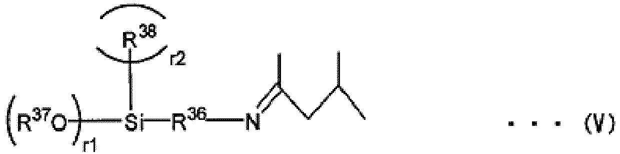 where r1+r2=3, with r1 being an integer of 1 to 3 and r2 being an integer of 0 to 2; R³⁶ is a C₁ to C₂₀ divalent aliphatic or alicyclic hydrocarbon group or a C₆ to C₁₈ divalent aromatic hydrocarbon group; R³⁷ is dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, C₁ to C₂₀ monovalent aliphatic or alicyclic hydrocarbon group, or C₆ to C₁₈ monovalent aromatic hydrocarbon group, and may be either identical or different when r1 is 2 or more; R³⁸ is a C₁ to C₂₀ hydrocarbyloxy group, a C₁ to C₂₀ monovalent aliphatic or alicyclic hydrocarbon group, or a C₆ to C₁₈ monovalent aromatic hydrocarbon group, and may be either identical or different when r2 is 2.

8. The rubber composition according to any one of claims 1 to 7, wherein:
the filler (C) contains 90 mass% or more of silica.

9. A method for producing the rubber composition according to any one of claims 1 to 8, comprising:
kneading the rubber component (A), the thermoplastic resin (B) and the filler (C) at 150°C to 165°C, without vulcanizing type compounding ingredients including a vulcanizing agent or a vulcanization accelerator.

10. A tire using the rubber composition according to any one of claims 1 to 8 for a tread rubber.
